# FASCICULE DE BREVET EUROPEEN

(11) **EP 1 006 686 B1**
(45) Date de publication et mention de la délivrance du brevet: **24.08.2005**
(21) Numéro de dépôt: 99402641.7
(22) Date de dépôt: 25.10.1999
(51) Int. Cl.: H04J 3/06, G06F 1/14

(54) **Procédé et système pour asservir une fréquence via un réseau de transmission asynchrone et réseau radiotéléphonique incluant ce système**
Verfahren und Vorrichtung zur Steuerung einer Frequenz durch ein asynchrones Übertragungsnetzwerk und Funktelefonienetzwerk, das die Vorrichtung verwendet
Method and system for controlling a frequency through an asynchronous transmission network and radio telephone network including the system

(30) Priorité: 03.12.1998 FR 9815273
(43) Date de publication de la demande: 07.06.2000
(73) Titulaire: ALCATEL, 75008 Paris (FR)
(72) Inventeur: Abouchakra, Rabih, 95240 Cormeilles en Parisis (FR); Symolon, Henri, 95460 Ezanville (FR); Vergnaud, Gérard, 95130 Franconville (FR); Roux, Raphael, 95100 Argenteuil (FR)
(74) Mandataire: Sciaux, Edmond

(56) Documents cités:
- AHMED H M: "ADAPTIVE TERMINAL SYNCHRONIZATION IN PACKET DATA NETWORKS" COMMUNICATIONS TECHNOLOGY FOR THE 1990'S AND BEYOND, DALLAS, NOV. 27 - 30, 1989, vol. 2, 27 novembre 1989 (1989-11-27), pages 728-732, XP000091166 INSTITUTE OF ELECTRICAL AND ELECTRONICS ENGINEERS
- MONTGOMERY W A: "TECHNIQUES FOR PACKET VOICE SYNCHRONIZATION" IEEE JOURNAL ON SELECTED AREAS IN COMMUNICATIONS, vol. SAC-01, no. 6, 1 décembre 1983 (1983-12-01), pages 1022-1028, XP000563228 ISSN: 0733-8716
- WANG C -J ET AL: "A MULTIMEDIA SYNCHRONIZATION PROTOCOL FOR ATM NETWORKS" PROCEEDINGS OF THE INTERNATIONAL CONFERENCE ON DISTRIBUTED COMPUTIN SYSTEMS, POZNAN, POLAND, JUNE 21 - 24, 1994, no. CONF. 14, 21 juin 1994 (1994-06-21), pages 476-483, XP000489110 INSTITUTE OF ELECTRICAL AND ELECTRONICS ENGINEERS ISBN: 0-8186-5842-8

## Description

La présente invention trouve application dans les télécommunications et notamment dans la réalisation d'un réseau radiotéléphonique.

Dans un tel réseau un accord de phase doit être assuré entre les horloges de diverses stations de base et il est souvent nécessaire de prévoir des moyens pour maintenir cet accord malgré la tendance de la fréquence d'une telle horloge à dériver au cours du temps. Cette invention s'applique avec avantage dans le cas où ces stations échangent des informations sous la forme de paquets transmis par un réseau de transmission asynchrone. Ces informations sont par exemple des voix humaines ou des données dans le cadre de communications établies entre des abonnés à ce réseau. Ces paquets sont généralement émis à des intervalles constants par une telle station. Mais le réseau asynchrone leur impose des délais de transit affectés de fluctuations aléatoires.

Pour réaliser l'accord de phase ci-dessus un premier procédé est connu sous les initiales SRTS pour Synchronous Residual Time Stamp. Il utilise une horloge de référence dont les signaux sont reçus par les stations de base par l'intermédiaire d'un moyen de transmission imposant à ces signaux des délais de transit constants. Il présente l'inconvénient que ce moyen doit relier cette horloge à toutes les stations, ce qui rend sa réalisation coûteuse.

C'est pourquoi un deuxième procédé connu a été défini pour maintenir l'accord de phase ci-dessus lorsqu'il a été préalablement réalisé. Ce procédé présente l'avantage d'utiliser seulement pour cela le réseau asynchrone qui est par ailleurs nécessaire pour transmettre les paquets porteurs d'informations. Il présente en outre l'avantage que ces paquets restent les seuls signaux injectés dans ce réseau. Il est connu sous l'appellation "synchronisation adaptative". En substance, il cumule en permanence les intervalles apparaissant entre les paquets reçus en sortie du réseau asynchrone, et il compare le résultat de ce cumul avec la somme d'un même nombre d'intervalles théoriques définis par une horloge locale. Le résultat de cette comparaison constitue pour ce procédé un signal d'erreur, c'est à dire que c'est ce signal qui est utilisé pour définir une éventuelle augmentation ou diminution à apporter à la fréquence de cette horloge, une variation de ce signal modifiant cette fréquence et une variation de cette fréquence modifiant ce signal dans le cadre d'une boucle de rétroaction. Ce procédé réalise ainsi un asservissement de cette fréquence à celle d'une horloge de référence qui cadence l'émission des paquets. Cet asservissement est tel qu'une éventuelle dérive de fréquence lente de l'horloge de référence serait répercutée sur l'horloge locale. Ce procédé présente notamment l'inconvénient d'affecter la fréquence de l'horloge locale d'une gigue à basse fréquence appelée en anglais "wander".

Ces premier et deuxième procédés connus sont plus précisément décrits dans une norme ITU-T, 1.363.1, respectivement aux paragraphes 2.5.2.2.2 et 2.5.2.2.1.

**L'article de Mills** DL, « Measured Performances of the Network Real Time Protocol in the Internet System » ; DARPA Network Working Group Report RFC-1128, Université de Delaware, pages i, ii, et 1 à 18 ; décrit des moyens seulement pour mesurer la précision d'un signal d'horloge fourni par une horloge distante.

Le document **CA2184517** décrit un autre procédé pour asservir la fréquence d'une horloge via un réseau de transmission asynchrone, comportant :
- une étape d'émission d'une suite de signaux dits de calage, marquant respectivement des instants, ces instants marqués étant séparés dans cette suite émise par des intervalles successifs ayant une même valeur, cette valeur constituant un intervalle de référence,
- une étape de transmission des signaux de calage, à travers ce réseau de transmission asynchrone, ces signaux étant transmis par ce réseau avec des délais de transit respectifs variés,
- une étape de réception d'une suite de signaux de calage, en sortie du réseau de transmission asynchrone, les instants marqués par ces signaux reçus constituant des instants de réception correspondant respectivement aux instants marqués par la suite des signaux de calage, des intervalles de réception étant présents dans cette suite reçue et ayant chacun un début constitué par l'un des dits instants de réception et une fin constituée par celui de ces instants qui suit ce début dans cette suite,
- une étape de détermination de décalages temporels respectivement associés aux signaux reçus, chacun de ces décalages apparaissant entre deux instants se correspondant et appartenant :
   -- l'un à ladite suite reçue formée d'instants respectivement marqués par ces signaux reçus, chaque instant étant marqué par une étiquettes temporelle (« Time stamp » inséré dans un paquet de données à l'instant d'émission, chaque étiquette étant égale à la voleur du contenu d'un compteur incrémenté par l'horloge qui commande l'émission des paquets et qui constitue l'horloge de référence),
   -- et l'autre à une à une suite théorique définie par un compteur local incrémenté périodiquement par une horloge locale pour engendrer une suite de valeurs théoriques qui serait identique et synchrone avec la suite (d'étiquettes temporelles) reçue si les deux horloges étaient parfaitement synchrones,
   le calcul d'un décalage consistant à calculer la différence entre l'étiquette temporelle d'un paquet reçu et la valeur théorique à l'instant de réception,
- une étape de calcul du décalage minimal dans une suite de décalages successifs (le décalage minimal correspondant à une cellule ATM qui a traversé le réseau en un minimum de temps),
- et une étape d'ajustage de la fréquence d'une horloge locale de manière à maintenir proche de zéro la moyenne d'une suite de décalages minimaux calculés successivement.

La présente invention concerne le réglage de la fréquence d'une horloge locale à partir de celle d'une horloge de référence via un réseau de transmission asynchrone et, elle a notamment pour but de réaliser pour cela à un coût limité un asservissement rapide, précis et stable, c'est à dire notamment exempt de toute gigue gênante.

Dans ce but elle a notamment pour objet un procédé pour asservir une fréquence d'une horloge locale via un réseau de transmission asynchrone, procédé dans lequel des signaux sont reçus comportant :
- une étape d'émission à la cadence d'une fréquence de référence d'une suite de signaux dits de calage, marquant respectivement des instants, ces instants marqués étant séparés dans cette suite émise par des intervalles successifs ayant une même valeur, cette valeur constituant un intervalle de référence, cet intervalle de référence étant égal à un nombre prédéterminé de périodes d'une horloge d'émission,
- une étape de transmission des signaux de calage, à travers ce réseau de transmission asynchrone, ces signaux étant transmis par ce réseau avec des délais de transit respectifs variés,
- une étape de réception d'une suite de signaux de calage en sortie d'un du réseau de transmission asynchrone, après avoir été cadencés à partir d'une fréquence de référence puis transmis par ce réseau avec des délais de transit respectifs variés, les instants marqués par ces signaux reçus constituant des instants de réception correspondant respectivement aux instants marqués par la suite des signaux de calage, des intervalles de réception étant présents dans cette suite reçue et ayant chacun un début constitué par l'un des dits instants de réception et une fin constituée par celui de ces instants de réception qui suit ce début dans cette suite,
- une étape de détermination de décalages temporels respectivement associés aux signaux reçus, chacun de ces décalages apparaissant entre deux instants se correspondant et appartenant, l'un à une suite reçue formée d'instants respectivement marqués par ces signaux reçus, et l'autre à une suite théorique définie par ladite horloge locale, cet instant de la suite reçue étant marqué par ledit signal associé à ce décalage,
- une étape de sélection des signaux reçus dont les délais de transit sont minimaux, parmi les signaux reçus, un signal reçu étant sélectionné lorsque le décalage associé à ce signal reçu est un décalage minimal parmi les décalages associés à un groupe d'instants consécutifs de ladite suite reçue, cette étape de sélection comportant le choix d'une succession de périodes de recherche, chacune de ces périodes ayant un début et une fin séparés par un nombre choisi desdits intervalles théoriques, ce nombre étant supérieur à trois et constituant une durée de cette période, cette période incluant une succession de dits instants de réception, et des étapes de recherche étant réalisées respectivement pour ces périodes de recherche et incluant chacune les étapes suivantes :
   -- choix d'une origine de recherche constituée par un instant non postérieur audit début de cette période,
   -- pour chacun des dits instants de réception de cette période, calcul d'un décalage associé à cet instant, ce décalage étant ledit décalage d'une dite plage de calcul ayant un début constitué par cette origine de recherche et une fin constituée par cet instant, et
   -- définition d'une borne de réglage, cette borne étant constituée par l'un desdits instants de réception de cette période et étant telle que ledit décalage am associé à cette borne est le plus petit des dits décalages associés à ces instants, lesdits débuts et fins desdites plages de réglage étant constituées par les dites bornes de régalage,
- une étape de formation d'un signal d'erreur à partir des signaux sélectionnés,
- une étape d'asservissement de la fréquence de l'horloge locale (HR) à la fréquence de référence, à l'aide d'un de ce signal d'erreur ;
**ce procédé étant caractérisé en ce que** la détermination des décalages temporels inclut les étapes suivantes :
- une étape de choix d'un intervalle théorique défini par rapport à la période de cette horloge locale, et qui est aussi proche que possible de la durée de l'intervalle de référence,
- une étape constituée d' une succession d'utilisations de cette horloge locale pour fournir une valeur de mesure pour chacun desdits intervalles de réception, cette valeur constituant un intervalle mesuré se terminant à ladite fin de cet intervalle,
- une étape de définition d'une pluralité de plages de calcul, chacune de ces plages ayant un début et une fin constitués respectivement par deux desdits instants de réception,
- et des étapes réalisées pour chacune des dites plages de calcul, ces étapes étant au moins les suivantes :
   -- une étape d'addition des dits intervalles mesurés se terminant dans cette plage, le résultat de cette addition constituant un intervalle mesuré cumulé de cette plage, le nombre de ces intervalles constituant un nombre d'intervalles de cette plage,
   -- une étape de multiplication dudit intervalle théorique par ledit nombre d'intervalles de cette plage, le résultat de cette multiplication constituant un intervalle théorique cumulé de cette plage, et
   -- une étape de calcul d'un décalage de cette plage, ce décalage ayant une valeur algébrique égale audit intervalle mesuré cumulé de cette plage moins ledit intervalle théorique cumulé de cette plage,
**et en ce que** l'étape de formation dudit signal d'erreur à partir des signaux sélectionnés comporte, pour chaque plage de calcul :
- une étape de calcul d'un décalage cumulé de cette plage de calcul, ledit décalage cumulé de ladite première plage étant ledit décalage am de cette plage, ledit décalage cumulé de chacune des dites plages suivantes étant la somme algébrique des dits décalages am de cette plage suivante et des plages précédant cette plage suivante dans ladite succession de plages,
- et une étape de formation d'un signal d'erreur constitué par ledit décalage cumulé d'une plage de cette succession de plages de calcul.

Dans la description de cette invention un signal est appelé "rapide" et son délai de transit est appelé "minimal" si ce délai est le plus court ou à peu près le plus court des délais de transit des signaux reçus en sortie du réseau asynchrone pendant une période incluant la réception de ce signal rapide. Plusieurs telles périodes peuvent être définies et un délai de transit minimal peut être recherché et trouvé dans chacune de ces périodes. De telles périodes sont appelées ci-après "périodes de recherche".

Typiquement le signal d'erreur est formé à partir de décalages temporels respectivement associés aux signaux reçus. Chacun de ces décalages apparaît entre deux instants se correspondant et appartenant, l'un à une suite reçue formée d'instants respectivement marqués par lesdits signaux reçus, et l'autre à une suite théorique définie par ladite horloge locale, cet instant de la suite reçue étant celui qui est marqué par le signal associé à ce décalage.

Dans la suite reçue, les instants marqués forment une succession à intervalles partiellement aléatoires. Mais, typiquement, ils ont formé une succession à intervalle constant dans une suite que ces signaux ont formée lorsqu'ils ont été émis, cet intervalle étant défini à partir de la fréquence de référence. La suite théorique définie par l'horloge locale présente alors elle aussi des intervalles constants lorsque la fréquence de cette horloge est elle même constante.

Divers moyens peuvent être employés pour sélectionner les signaux rapides. Un tel moyen se présente si chaque signal peut être muni d'une marque horaire indiquant l'heure à laquelle il a été injecté dans le réseau de transmission. Cette heure est alors comparée à l'heure définie par l'horloge locale pour la réception de ce signal et cette comparaison permet de sélectionner au moins approximativement les signaux rapides. Mais ce moyen présente l'inconvénient d'accroître le coût du procédé par l'ajout des marques horaires. C'est pourquoi, de préférence, dans le cadre de cette invention, un signal reçu est sélectionné en tant que signal rapide lorsque le décalage associé à ce signal a une valeur minimale dans un groupe de tels décalages. Ce groupe est formé par les décalages qui sont associés aux instants de la suite reçue compris dans l'une des périodes de recherche mentionnées ci-avant.

A l'aide des figures schématiques ci-jointes on va décrire cette invention plus complètement ci-après tout en indiquant, à titre d'exemple, comment elle peut être mise en oeuvre.

La figure 1 représente une partie d'un réseau radiotéléphonique mettant cette invention en oeuvre.

La figure 2 présente un diagramme temporel illustrant le transit de signaux entre un émetteur et un récepteur du réseau de la figure 1.

La figure 3 présente un diagramme temporel illustrant une comparaison temporelle effectuée dans le récepteur ci-dessus.

La figure 4 présente un algorithme mis en oeuvre dans ce récepteur. La figure 5 présente un diagramme montrant, pour chacune des valeurs possibles du délai de transit d'un signal dans un réseau de transmission asyncrhone, la densité de probabilité de l'occurence de cette valeur.

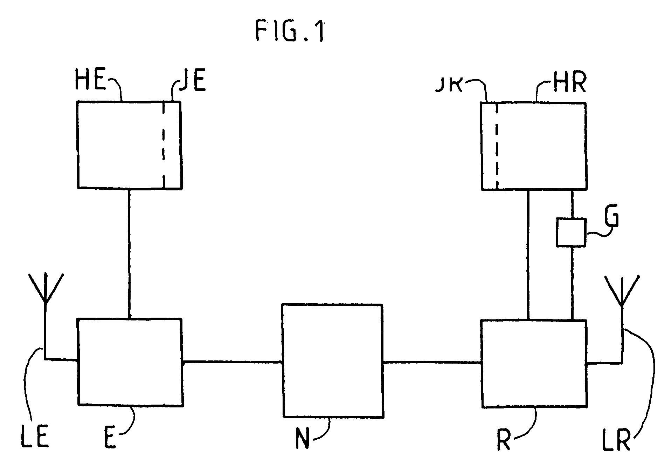

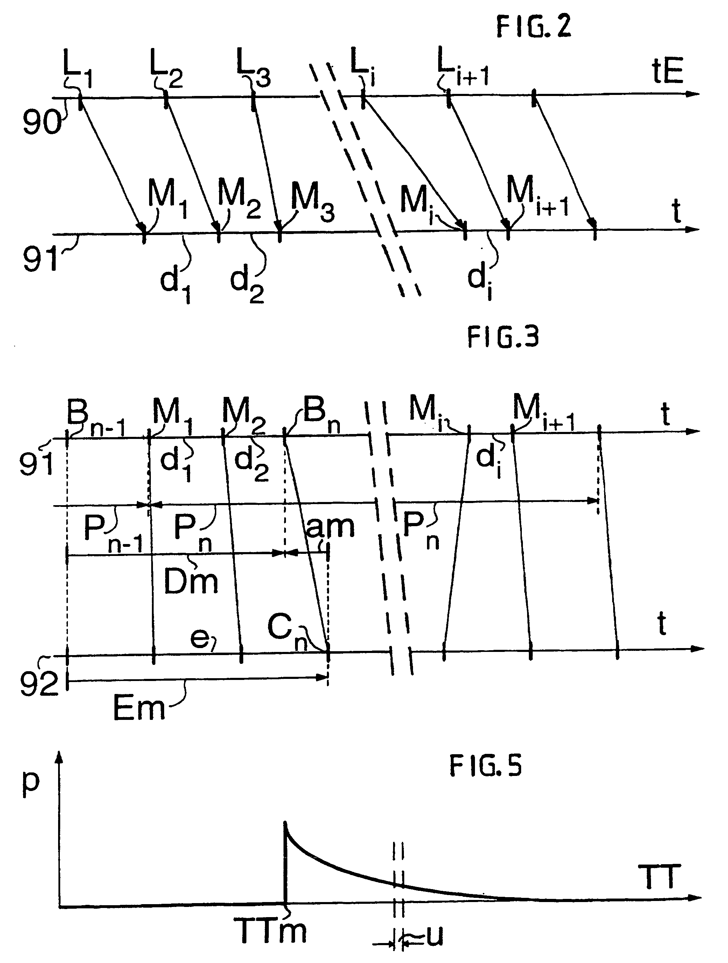

Le procédé de cette invention et le deuxième procédé connu mentionné ci-dessus comportent tous deux, en substance les étapes suivantes:
- Une étape d'émission d'une suite de signaux marquant respectivement des instants, cette suite, ces signaux et ces instants constituant respectivement une suite émise visible sur l'axe 90 de la figure 2, des signaux de calage non représentés et des instants marqués L₁....Lᵢ. Ces instants marqués sont séparés dans cette suite émise par des intervalles successifs ayant une même valeur, cette valeur constituant un intervalle de référence. L'organe qui émet ces signaux est représenté en E sur la figure 1 et il sera appelé ci-après émetteur. Il est cadencé par une horloge HE qui sera appelée horloge de référence et l'intervalle de référence est égal à un nombre prédéterminé de périodes de cette horloge. La fréquence F de cette horloge constitue la fréquence de référence mentionnée ci-avant. Elle est typiquement constante. Mais cette invention serait encore utile si cette fréquence était modifiée. Le temps tE porté sur l'axe 90 est celui qui est défini par cette horloge.
- Une étape d'injection de la suite émise dans le réseau de transmission asynchrone déjà mentionné N.
- Une étape de réception des signaux de calage en sortie du réseau par un récepteur R à distance de l'émetteur E. Ces signaux forment pour ce récepteur une suite constituant la suite reçue mentionnée ci-avant, les instants marqués par ces signaux constituant dans cette suite des instants de réception M₁....Mᵢ correspondant respectivement aux instants L₁....Lᵢ.

Typiquement des paquets porteurs d'informations sont transmis par le réseau N de l'émetteur E au récepteur R pour réaliser une communication dans le cadre d'un ensemble téléphonique. Dans ce cas les signaux de calage peuvent être constitués avec avantage par ces paquets, l'instant marqué par un tel paquet étant par exemple un début défini par une en-tête de ce paquet. Les étapes d'émission, d'injection et de réception mentionnées ci-dessus sont alors nécessaires à la réalisation des communications et leur utilisation dans le procédé d'asservissement de fréquence ne nécessite aucune modification de l'ensemble téléphonique.

Des intervalles de réception d_{1.}....dᵢ apparaissent dans cette suite reçue. Chacun d'eux tel l'intervalle d₁, a un début tel que M₁ constitué par l'un des instants de réception et une fin telle que M₂ constituée par celui de ces instants qui suit ce début dans cette suite. Ces instants de réception sont marqués sur l'axe 91 des figures 2 et 3. Les intervalles de réception sont différents les uns des autres parce que le réseau de transmission a fait subir aux signaux de calage des délais de transit qui ont varié d'une manière aléatoire d'un signal à l'autre, chacun de ces délais étant cependant au moins égal à un délai de base qui est imposé par la structure du réseau et par les positions de l'émetteur et du récepteur par rapport à celui-ci.

Ce récepteur R est cadencé par l'horloge locale HR mentionnée ci-avant. Cette horloge a une fréquence réglable et une période définie par cette fréquence. Le temps t porté sur les axes de la figure 3 est celui qui est défini par cette horloge.
- Une étape de choix d'un intervalle théorique "e" défini par rapport à la période de cette horloge locale. Typiquement, au départ du procédé, cet intervalle est choisi pour que sa durée soit aussi proche que possible de celle de l'intervalle de référence. Compte est tenu pour cela des valeurs approchées connues de la fréquence de l'horloge de référence et de celle de l'horloge locale.
- Une succession d'utilisations de cette horloge locale pour fournir une valeur de mesure pour chacun des intervalles de réception, cette valeur constituant un intervalle mesuré se terminant à ladite fin de cet intervalle. Cette utilisation de l'horloge locale entraine que l'intervalle mesuré est à la fois représentatif de la durée de l'intervalle de réception et proportionnel à la fréquence de cette horloge.
- La définition d'une pluralité de plages de calcul, chacune de ces plages ayant un début et une fin constitués respectivement par deux des instants de réception.
- Enfin des étapes réalisées pour chacune des plages de calcul. Ces étapes sont typiquement réalisées dans le récepteur et elles sont au moins les suivantes :

- Une étape d'addition des intervalles mesurés se terminant dans cette plage. Le résultat de cette addition constitue un intervalle mesuré cumulé D de cette plage et le nombre de ces intervalles constitue un nombre d'intervalles de cette plage.
- Une étape de multiplication de l'intervalle théorique par le nombre d'intervalles de cette plage. Le résultat de cette multiplication constitue un intervalle théorique cumulé E de cette plage.
- Enfin une étape de calcul d'un décalage "a" de cette plage. Ce décalage a une valeur algébrique égale à l'intervalle mesuré cumulé de cette plage moins ledit intervalle théorique cumulé de cette plage. Il constitue l'un des décalages mentionnés ci-avant apparaissant entre deux instants appartenant l'un à la suite reçue et l'autre à une suite théorique. Les instants de la suite théorique sont marqués sur l'axe 92 de la figure 3. Ils sont séparés du début de cette plage chacun par un nombre entier d'intervalles théoriques, ce nombre étant celui des d'intervalles de cette plage dans le cas de l'instant Cₙ considéré pour le calcul de ce décalage.

Le procédé inclut en outre des étapes d'action pour régler la fréquence de l'horloge locale, chacune de ces étapes constitue une étape terminale d'une séquence de réglage incluant aussi un groupe de réglage de cette étape, ce groupe incluant au moins une dite plage de calcul. Les plages de calcul de ce groupe constituent respectivement des plages de réglage, un décalage A cumulé de ce groupe est constitué par la somme algébrique des décalages de ces plages de réglage. Une action de cette étape apporte à la fréquence de l'horloge locale une modification en plus ou moins selon que le décalage cumulé de ce groupe est négatif ou positif, respectivement, de sorte que ce décalage cumulé constitue un signal d'erreur tel que mentionné ci-avant.

Typiquement la réalisation de cette action et l'amplitude de cette modification dépendent notamment des étapes de réglage antérieures et de la valeur absolue du décalage cumulé de manière à réaliser un asservissement stable et de préférence rapide et précis de l'intervalle théorique à l'intervalle de référence. Cet asservissement constitue l'asservissement ci-avant mentionné de la fréquence de l'horloge locale à celle de l'horloge de référence, ou à cette dernière fréquence multipliée par un nombre prédéterminé connu. Sa stabilité, sa rapidité et sa précision dépendent notamment du choix des plages de réglage.

Si le procédé connu de synchronisation adaptative est décrit à l'aide des termes adoptés ci-avant, il apparait que les plages de calcul de ce procédé connu ont un début commun et qu'elles constituent chacune une plage de réglage. Ce début est situé dans une phase initiale de la mise en oeuvre du procédé et il est déterminé par l'instant initial de cette mise en oeuvre. Chacun des instants de réception postérieurs à ce début constitue alors la fin d'un telle plage de sorte que chacune de ces plages ajoute simplement un intervalle à une plage précédente.

Le procédé de cette invention se distingue de ce procédé connu notamment par les points suivants :
- Il inclut une étape de choix d'une succession de périodes de recherche telles que Pₙ₋₁ et Pₙ sur la figure 3, chacune de ces périodes ayant un début et une fin séparés par un nombre choisi d' intervalles théoriques. Ce nombre est supérieur à trois et constitue une durée "k" de cette période. Cette période inclut une succession d'instants de réception.
- Il inclut aussi des étapes de recherche réalisées respectivement pour ces périodes de recherche et incluant chacune les étapes suivantes :

- Une étape de choix d'une origine de recherche constituée par un instant non postérieur au début de cette période.
- Pour chacun des instants de réception de cette période, une étape de calcul d'un décalage associé à cet instant. Ce décalage est le décalage d'une plage de calcul ayant un début constitué par cette origine de recherche et une fin constituée par cet instant.
- Enfin une étape de définition d'une borne de réglage telle que Bₙ. Cette borne est constituée par l'un des instants de réception de cette période. Elle est telle que le décalage "am" associé à cette borne est le plus petit des décalages associés à ces instants. Elle constitue un instant de décalage minimal de cette période. Son mode de définition fait que le signal de calage qui la marque dans la suite reçue est l'un des signaux rapides mentionnés ci-avant. Le délai de transit de ce signal est plus précisément le délai le plus court de cette période.

Selon cette invention les débuts et les fins des plages de réglage sont alors constituées seulement par des bornes de réglage telles que définies comme indiqué ci-dessus. Par exemple les bornes Bₙ₋₁ et Bₙ limitent une telle plage de durée Dm.

Cette sélection des plages de calcul utilisées pour former le signal d'erreur présente l'avantage de supprimer, ou au moins de diminuer fortement, les fluctuations de fréquence qui peuvent résulter de certaines variations des délais de transit imposés aux signaux de calage successifs. Cet avantage résulte de l'utilisation sélective de signaux rapides pour déterminer les bornes de ces plages. Il tient à un fait qui a été reconnu et mis à profit dans le cadre de cette invention et qui se manifeste lorsque les périodes de recherche ci-dessus sont suffisamment longues. Ce fait est que la différence entre les délais de transit de deux signaux choisis au hasard est alors rendue beaucoup plus faible, en moyenne, quand ces deux signaux sont choisis parmi les seuls signaux rapides que si ces signaux avaient été choisis parmi tous les signaux transmis. Cette diminution de la différence moyenne entre deux délais de transit tient au fait que, lorsque le nombre des signaux transmis est grand, le nombre de délais de transit rencontrés dans un intervalle de largeur donnée tel que "u" sur la figure 5 est d'autant plus grand que cet intervalle est proche du délai de base TTm mentionné ci-avant, ce nombre étant indiqué par la densité p de la probabilité pour qu'un délai de transit ait une valeur TT.

De préférence, dans la succession des périodes de recherche, le début tel que M₁ de chacune de ces périodes telle que Pₙ est constitué par la fin de la période précédente Pₙ₋₁.

De préférence encore, pour chaque période de recherche constituant une période considérée Pₙ, l'origine de recherche de cette période est constituée par la borne de réglage Bₙ₋₁ d'une période de recherche Pₙ₋₁ précédant cette période considérée dans la succession de périodes de recherche. Une plage de réglage a alors son début et sa fin respectivement constitués par les deux bornes de réglage Bₙ₋₁ et Bₙ de ces deux périodes.

La durée "k" des périodes de recherche successives est adaptée au trafic du réseau N. Elle peut être constante. Elle peut cependant être accrue avec avantage quand il apparait que le réseau N s'approche d'un état de surcharge, ceci parce qu'il est préférable qu'un signal de calage ne soit sélectionné que si son délai de transit n'excède que de peu le délai de base. Un signal ayant un tel délai de transit sera désigné ci-après comme étant "suffisamment rapide". L'avantage ci-dessus résulte alors du fait qu'à l'approche de l'état de surcharge, les délais de transit tendent à s'éloigner du délai de base TTm. L'augmentation de la durée "k" permet alors de trouver dans chacune des périodes de recherche un tel signal suffisamment rapide malgré la diminution de la proportion de tels signaux dans l'ensemble des signaux de calage. Si la charge du réseau N diminue plus tard, la durée "k" est alors ramenée à une valeur de base pour éviter un allongement inutile du délai d'accrochage nécessaire pour amener la fréquence de l'horloge locale au voisinage de la fréquence de référence.

Une modification de la fréquence de l'horloge locale pourrait être effectuée après chaque plage de réglage, cette plage constituant alors à elle seule un groupe de réglage.

Cependant, de préférence, les plages de chaque groupe de réglage forment une succession de plages, la séquence de réglage incluant, pour chaque plage de réglage telle que Dm de ce groupe, le calcul d'un décalage cumulé A de cette plage. Le décalage cumulé de la première plage de cette succession est le décalage "am" de cette plage et le décalage cumulé de chacune des plages suivantes est la somme algébrique des décalages "am" de cette plage suivante et des plages qui la précédent. Un signal d'erreur du procédé est alors constitué par le décalage cumulé d'une plage de ce groupe.

De préférence les séquences de réglage forment elles aussi une succession. Le procédé inclut alors en outre une étape de définition d'un domaine de décalage toléré, ce domaine s'étendant entre un seuil de décalage positif et un seuil de décalage négatif ayant typiquement une même valeur absolue S. Il inclut encore une étape de définition d'une succession d'incréments de fréquence f respectifs pour les séquences de réglage. La modification de fréquence mentionnée ci-avant pour chaque séquence de réglage est alors apportée seulement quand le décalage cumulé A d'une plage du groupe de réglage de cette séquence sort du domaine de décalage toléré, cette modification ayant une amplitude égale à l'incrément de fréquence défini pour cette séquence. Cette plage constitue alors une dernière plage de ce groupe de réglage. La grandeur et l'évolution de l'incrément de fréquence sont déterminées pour assurer la stabilité, la rapidité et la précision de l'asservissement.

Dans une phase initiale du processus d'asservissement, l'écart de fréquence de l'horloge locale peut être grand par rapport à la fréquence de référence. Pour accélérer le processus, l'incrément "f" a alors de préférence une valeur élevée par rapport à un incrément de base "h" et il augmente jusqu'à ce qu'un franchissement de la fréquence de référence soit détecté. Chaque fois qu'un tel franchissement a été détecté cet incrément est diminué jusqu'à être ramené progressivement à l'incrément de base pour assurer la stabilité de l'asservissement. Lorsqu'un écart de fréquence se manifeste à nouveau cet incrément reste d'abord constant pendant un certain nombre de groupes de réglage donnant un même sens de progression à la fréquence F, puis il croît à partir d'une valeur égale à l'incrément de base multiplié par ce même nombre, ceci jusqu'à ce qu'un nouveau franchissement soit détecté.

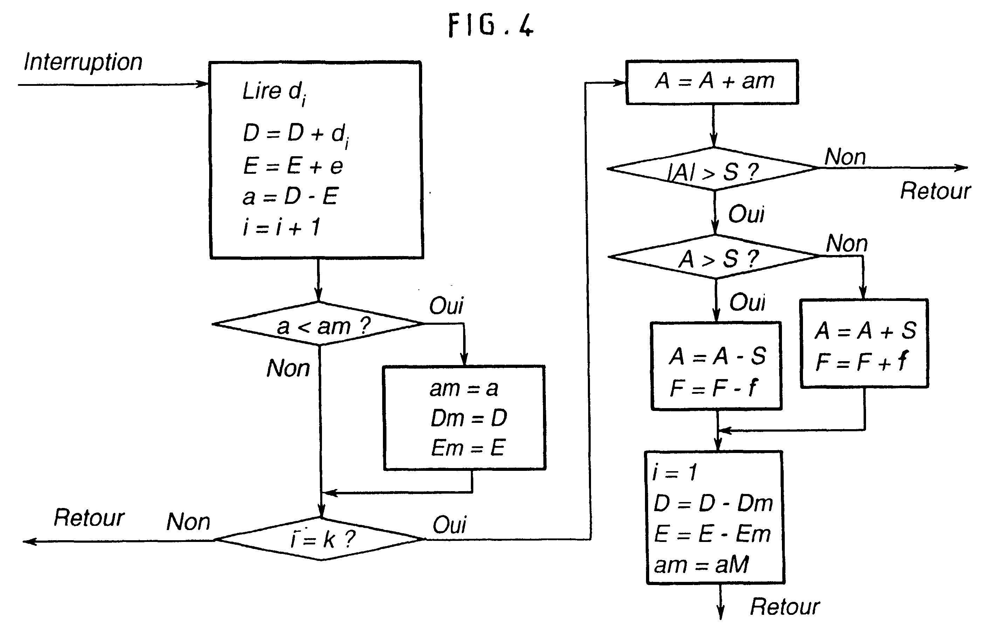

Un autre objet de cette invention est un système pour asservir une fréquence via un réseau de transmission asynchrone. Ce système met en oeuvre le procédé de l'invention. Il inclut pour cela le récepteur R et l'horloge locale HR et ce récepteur inclut un programme d'asservissement pour exécuter en substance les instructions récapitulées dans l'algorithme de la figure 4.

Ces instructions sont exécutées à chacun des instants de réception, les signaux qui marquent ces instants étant reçus sur une entrée désignée "interruption". Elles sont les suivantes :
- lire l'intervalle dᵢ mesuré entre cet instant de réception Mᵢ₊₁ et l'instant de réception Mᵢ précédant cet instant dans la suite reçue, i étant un indice valant 1 pour le premier instant de réception après le début de chaque période de recherche,
- faire D= D + dᵢ, D étant l'intervalle mesuré cumulé d'une plage de calcul comprise dans cette période,
- faire E= E + e, E étant l'intervalle théorique cumulé et e l'intervalle théorique,
- faire a= D - E, a étant le décalage de cette plage,
- faire i = i + 1,
- répondre à la question a<am?, am étant une grandeur prévue pour évoluer jusqu'à représenter le décalage associé à une borne de calcul,
- si la réponse à la question précédente est "oui ":

- faire am = a,
- faire Dm =D, Dm étant défini par des instructions ultérieures,
- faire Em = E,
- quelle que soit la réponse à la question précédente, répondre à la question i= k?, k étant la durée de cette période de recherche,
- si la réponse à la question précédente est "non" attendre le prochain instant de réception, (Une telle instruction est notée "retour" sur la figure).
- si la réponse à la question précédente est "oui" et si de plus une action telle que définie ci-avant est par ailleurs conforme au programme, réaliser cette action,
- faire i = 1,
- faire D = D - Dm,
- faire E = E - Em,
- faire am = aM, aM étant une grandeur prédéterminée au moins égale à la plus grande valeur prévisible d'un décalage associé à un instant de réception, et
- attendre le prochain instant de réception.

De préférence ce système inclut en outre une unité de calcul d'incrément G pour calculer l'incrément de fréquence f. Cette unité est informée par le récepteur R et informe l'horloge locale HR. L'instruction ci-dessus de réaliser une action inclut alors les instructions suivantes :
- faire A = A + am, A étant une grandeur variable ayant une valeur nulle lors de la mise en service de ce système,
- répondre à la question IAI > S?, S étant une valeur absolue commune aux seuils de décalage positif et négatif,
- si la réponse à la question précédente est "non", attendre le prochain instant de réception,
- si la réponse à la question précédente est "oui", répondre à la question A>S?
- si la réponse à la question précédente est "non", faire A= A + S
- réaliser une modification F= F + f, F étant la fréquence de l'horloge locale, chaque modification étant réalisée par une commande de cette horloge par le récepteur R avec l'aide de l'unité de calcul d'incrément G,
- informer l'unité G de la modification précédente, (les instructions d'informer cette unité ne sont pas représentées)
- si la réponse à la question précédente est "oui", faire A = A - S,
- réaliser une modification F = F - f, et
- informer l'unité G de la modification précédente.

De préférence l'horloge locale HR est munie d'une unité de mise en phase JR programmée pour réaliser un accord de phase provisoire de cette horloge locale avec une base de temps extérieure à ce système grâce à un échange de signaux de synchronisation avec cette base de temps. Cet échange est fait via un moyen de transmission imposant à ces signaux des délais de transit constants. Le système de cette invention constitue alors un système de synchronisation permettant d'obtenir un accord de phase durable grâce à l'asservissement de fréquence décrit ci-avant.

La base de temps est par exemple constituée par l'horloge HE de l'émetteur E, cette horloge étant munie d'une unité de diffusion JE communiquant avec l'unité JR. Le moyen de transmission est par exemple un canal radio. Les unités JR et JE permettent de réaliser un accord de phase initial entre les horloges HE et HR. Elles utilisent pour cela des antennes LE et LR appartenant respectivement à l'émetteur E et au récepteur R. L'asservissement de fréquence permet ensuite de maintenir cet accord avec une précision acceptable au moins pendant une période après laquelle une nouvelle mise en phase est faite par ces unités. Cette période peut être rendue très longue par l'asservissement. Ce dernier permet ainsi de ne pas encombrer le canal radio ci-dessus.

La séquence d'échange des signaux de synchronisation entre les unités JE et JR peut être analogue à celle du protocole NTP décrit dans les publications RFC 1305 et RFC 1361. Une telle séquence va être décrite étant entendu que chaque instant d'émission ou de réception d'un signal est défini à l'aide de l'horloge de l'unité qui émet ou reçoit ce signal : A une heure H₀ non représentée l'unité JE émet un premier signal muni d'une marque horaire indiquant cette heure. A une heure H₁ l'unité JR reçoit ce signal et, à une heure H₂, elle émet un deuxième signal muni de marques horaires indiquant les heures H₀, H₁ et H₂. A une heure H₃ l'unité JE reçoit ce deuxième signal et, à une heure H₄ elle émet un troisième signal muni de marques horaires H₀, H₁, H₂, H₃ et H₄ et d'un élément indiquant la valeur d'un délai d'aller-retour RTD = H₁ - H₂ + H₃ - H₀. A l'instant où l'unité JR reçoit ce troisième signal elle règle l'horloge locale HR pour que cette dernière indique pour cet instant l'heure H₄ + 1/2 RTD.

Cette invention a également pour objet un réseau radiotéléphonique incluant une pluralité de stations de base connectées les unes autres via un réseau de transmission asynchrone N. Ce réseau est caractérisé par le fait que l'une au moins de ces stations de base constitue un système tel que décrit ci-avant. Typiquement l'émetteur E et le récepteur R décrits ci-avant sont constitués chacun par l'une de ces stations de base. Les antennes LE et LR permettent à cet émetteur et à ce récepteur de communiquer avec les terminaux mobiles du réseau.

Dans un tel réseau chacune des stations de base constituant un récepteur tel que R traite de nombreuses communications, c'est à dire qu'elle reçoit, traite et émet divers paquets, les opérations de traitement pouvant inclure des modifications, des routages etc... Ce récepteur inclut donc, pour effectuer ces opérations, un programme qui sera appelé ci-après programme principal. A chaque arrivée d'un paquet, ce programme principal est interrompu pour mettre en oeuvre le programme d'asservissement mentionné ci-avant. C'est pourquoi, sur la figure 4, le point d'arrivée de tels paquets est désigné par le mot "interruption". Quant au mot "retour", il désigne un retour au programme principal dans l'attente de l'arrivée du prochain paquet.

Des avantages de l'invention apparaissent dans le cas où les stations de base d'un tel réseau sont assez proches les unes des autres pour que les délais de transmission des ondes radio entre les terminaux mobiles des abonnés et les stations de base soient à peu près négligeables. Tel est le cas d'un réseau radiotéléphonique local du type réseau numérique européen de transmission sans fil DECT dans lequel les distances entre stations sont souvent comprises entre 20 et 500 m et dans lequel chaque station est munie d'une horloge de synchronisation de trame pilotée par une horloge telle que HE et HR et ayant une fréquence de 100 Hz. Le maintien d'un accord de phase entre les horloges de synchronisation de trame est alors nécessaire pour permettre le transfert (hand over) d'une communication entre deux stations de base lors d'un déplacement d'un abonné participant à cette communication. Cette invention facilite ce transfert.

Certaines grandeurs mentionnées ci-avant peuvent par exemple être comprises entre les limites suivantes et/ou avoir les valeurs suivantes :
- durée k des périodes de recherche : entre 10 et 10 000, une valeur typique étant :250,
- fréquence des horloges : valeur typique 16 384 KHz,
- délai de base TTm pour le transit d'un paquet dans le réseau N : moins de 100 ms,
- intervalle théorique "e" : entre 1 et 100 ms, une valeur typique étant 8 ms,
- seuil de décalage S : entre 3 200 et 32 000 ns, une valeur typique étant 12 800 ns,
- incrément de fréquence de base h : valeur typique 0, 28 Hz.

En présence d'un écart de fréquence initial pouvant atteindre plusieurs hertz entre deux horloges telles que HE et HR, cette invention permet de stabiliser la fréquence de cette dernière dans un délai d'accrochage voisin de une ou deux minutes. L'égalité souhaitée entre les deux fréquences est alors atteinte avec une précision telle que l'écart de temps entre les deux horloges de synchronisation de trame peut être maintenu au dessous de 4 000 ns pendant un délai de maintien tel que deux ou trois minutes. Un tel délai permet, pour des opérations quasi périodiques de réalisation de l'accord de phase, de trouver facilement des intervalles temporels disponibles entre deux communications téléphoniques dans un canal radio prévu pour de telles opérations.

## Revendications

1. Procédé pour asservir une fréquence d'une horloge locale (HR) via un réseau de transmission asynchrone (N), comportant :
- une étape d'émission à la cadence d'une fréquence de référence d'une suite de signaux dits de calage, marquant respectivement des instants (L₁....Lᵢ), ces instants marqués étant séparés dans cette suite émise par des intervalles successifs ayant une même valeur, cette valeur constituant un intervalle de référence, cet intervalle de référence étant égal à un nombre prédéterminé de périodes d'une horloge d'émission (HE),
- une étape de transmission des signaux de calage, à travers ce réseau de transmission asynchrone,ces signaux étant transmis par ce réseau avec des délais de transit respectifs variés,
- une étape de réception d'une suite de signaux de calage en sortie du réseau de transmission asynchrone, les instants marqués par ces signaux reçus constituant des instants de réception (M₁....Mᵢ) correspondant respectivement aux instants (L₁....Lᵢ) marqués par la suite des signaux de calage, des intervalles de réception (d₁,....dᵢ) étant présents dans cette suite reçue et ayant chacun (d₁) un début (M₁) constitué par l'un des dits instants de réception et une fin (M₂) constituée par celui de ces instants de réception qui suit ce début dans cette suite,
une étape de détermination de décalages temporels (am) respectivement associés aux signaux reçus, chacun de ces décalages apparaissant entre deux instants (Bₙ,Cₙ) se correspondant et appartenant, l'un à une suite reçue formée d'instants respectivement marqués par ces signaux reçus, et l'autre à une suite théorique définie par ladite horloge locale (HR), cet instant de la suite reçue étant marqué par ledit signal associé à ce décalage,
- une étape de sélection des signaux reçus dont les délais de transit sont minimaux, parmi les signaux reçus, un signal reçu étant sélectionné lorsque le décalage associé à ce signal reçu est un décalage minimal parmi les décalages associés à un groupe d'instants consécutifs (Pₙ) de ladite suite reçue, cette étape _de sélection comportant le choix d'une succession de périodes de recherche (Pₙ₋₁, Pₙ), chacune de ces périodes ayant un début et une fin séparés par un nombre choisi desdits intervalles théoriques, ce nombre étant supérieur à trois et constituant une durée (k) de cette période, cette période incluant une succession de dits instants de réception, et des étapes de recherche étant réalisées respectivement pour ces périodes de recherche et incluant chacune les étapes suivantes :
-- choix d'une origine de recherche constituée par un instant non postérieur audit début de cette période,
-- pour chacun des dits instants de réception de cette période, calcul d'un décalage associé à cet instant, ce décalage étant ledit décalage d'une dite plage de calcul ayant un début constitué par cette origine de recherche et une fin constituée par cet instant, et
-- définition d'une borne de réglage (Bₙ), cette borne étant constituée par l'un desdits instants de réception de cette période et étant telle que ledit décalage am associé à cette borne est le plus petit des dits décalages associés à ces instants, lesdits débuts et fins desdites plages de réglage (Dm) étant constituées par les dites bornes de réglage (Bₙ₋₁ et Bₙ₎,
- une étape de formation d'un signal d'erreur à partir des signaux sélectionnés,
- une étape d'asservissement de la fréquence de l'horloge locale (HR) à la fréquence de référence, à l'aide de ce signal d'erreur ;
**ce procédé étant caractérisé en ce que** la détermination des décalages temporels inclut les étapes suivantes :
- une étape de choix d'un intervalle théorique (e) défini par rapport à la période de cette horloge locale (HR), et qui est aussi proche que possible de la durée de l'intervalle de référence,
- une étape constituée d' une succession d'utilisations de cette horloge locale (HR) pour fournir une valeur de mesure pour chacun desdits intervalles de réception, cette valeur constituant un intervalle mesuré se terminant à ladite fin de cet intervalle,
- une étape de définition d'une pluralité de plages de calcul, chacune de ces plages ayant un début et une fin constitués respectivement par deux desdits instants de réception,
- et des étapes réalisées pour chacune des dites plages de calcul, ces étapes étant au moins les suivantes :
-- une étape d'addition des dits intervalles mesurés se terminant dans cette plage, le résultat de cette addition constituant un intervalle mesuré cumulé (D) de cette plage, le nombre de ces intervalles constituant un nombre d'intervalles de cette plage,
-- une étape de multiplication dudit intervalle théorique (e) par ledit nombre d'intervalles de cette plage, le résultat de cette multiplication constituant un intervalle théorique cumulé (E) de cette plage, et
-- une étape de calcul d'un décalage (a) de cette plage, ce décalage ayant une valeur algébrique (D - E) égale audit intervalle mesuré cumulé de cette plage moins ledit intervalle théorique cumulé de cette plage ;
**et en ce que** l'étape de formation dudit signal d'erreur à partir des signaux sélectionnés comporte, pour chaque plage de calcul :
- une étape de calcul d'un décalage cumulé (A) de cette plage de calcul, ledit décalage cumulé de ladite première plage étant ledit décalage (am) de cette plage, ledit décalage cumulé de chacune des dites plages suivantes étant la somme algébrique des dits décalages am de cette plage suivante et des plages précédant cette plage suivante dans ladite succession de plages,
- et une étape de formation d'un signal d'erreur constitué par ledit décalage cumulé d'une plage de cette succession de plages de calcul.

2. Procédé selon la revendication 1, ce procédé étant **caractérisé par le fait qu'**il comporte en outre des étapes d'action pour régler la fréquence de ladite horloge locale, chacune de ces étapes constituant une étape terminale d'une séquence de réglage incluant aussi un groupe de réglage de cette étape, ce groupe incluant au moins une dite plage de calcul, les plages de calcul de ce groupe constituant respectivement des plages de réglage, un décalage (A) cumulé de ce groupe étant constitué par la somme algébrique desdits décalages de ces plages de réglage, une action de cette étape apportant à la fréquence de ladite horloge locale (HR) une modification en plus ou moins selon que ledit décalage cumulé de ce groupe est négatif ou positif, respectivement, de sorte que ce décalage cumulé constitue un dit signal d'erreur.

3. Procédé selon la revendication 2, ce procédé étant **caractérisé par le fait que**, dans ladite succession des périodes de recherche, le début (M₁) de chacune de ces périodes (Pₙ) est constitué par la fin de la période précédente (Pₙ₋₁).

4. Procédé selon la revendication 3, ce procédé étant **caractérisé par le fait que**, pour chaque dite période de recherche constituant une période considérée (Pₙ), ladite origine de recherche de cette période est constituée par ladite borne de réglage (Bₙ₋₁) d'une période de recherche (Pₙ₋₁) précédant cette période considérée dans ladite succession de périodes de recherche, une dite plage de réglage ayant son début et sa fin respectivement constitués par les deux dites bornes de réglage (Bₙ₋₁, Bₙ) de ces deux périodes.

5. Procédé selon la revendication 4, ladite durée (k) des périodes de recherche étant comprise entre 10 et 10 000.

6. Procédé selon la revendication 1, lesdites séquences de réglage formant une succession de séquences, ce procédé incluant en outre les étapes de :
- définition d'un domaine de décalage toléré s'étendant entre un seuil de décalage positif (S) et un seuil de décalage négatif (-S), et
- définition d'une succession d'incréments de fréquence (f) respectifs pour lesdites séquences de réglage, ladite modification de fréquence de chaque dite séquence de réglage étant apportée seulement quand ledit décalage cumulé (A) d'une plage dudit groupe de réglage de cette séquence sort du dit domaine de décalage toléré, cette modification ayant une amplitude égale audit incrément de fréquence (f) défini pour cette séquence, cette plage constituant alors une dernière plage de ce groupe de réglage.

7. Système pour asservir une fréquence d'une horloge locale (HR) via un réseau de transmission asynchrone (N), comportant :
- des moyens d'émission à la cadence d'une fréquence de référence d'une suite de signaux dits de calage, marquant respectivement des instants (L₁....Lᵢ), ces instants marqués étant séparés dans cette suite émise par des intervalles successifs ayant une même valeur, cette valeur constituant un intervalle de référence, cet intervalle de référence étant égal à un nombre prédéterminé de périodes d'une horloge d'émission (HE),
- des moyens de transmission des signaux de calage, à travers ce réseau de transmission asynchrone,ces signaux étant transmis par ce réseau avec des délais de transit respectifs variés,
- des moyens de réception d'une suite de signaux de calage en sortie du réseau de transmission asynchrone, les instants marqués par ces signaux reçus constituant des instants de réception (M₁....Mᵢ) correspondant respectivement aux instants (L₁....Lᵢ) marqués par la suite des signaux de calage, des intervalles de réception (d₁,....dᵢ) étant présents dans cette suite reçue et ayant chacun (d₁) un début (M₁) constitué par l'un des dits instants de réception et une fin (M₂) constituée par celui de ces instants de réception qui suit ce début dans cette suite,
- des moyens de détermination de décalages temporels (am) respectivement associés aux signaux reçus, chacun de ces décalages apparaissant entre deux instants (Bₙ,Cₙ) se correspondant et appartenant, l'un à une suite reçue formée d'instants respectivement marqués par ces signaux reçus, et l'autre à une suite théorique définie par ladite horloge locale (HR), cet instant de la suite reçue étant marqué par ledit signal associé à ce décalage,
- des moyens de sélection des signaux reçus dont les délais de transit sont minimaux, parmi les signaux reçus, un signal reçu étant sélectionné lorsque ledit décalage associé à ce signal reçu est un décalage minimal parmi les décalages associés à un groupe d'instants consécutifs (Pₙ) de ladite suite reçue, cette étape de sélection comportant le choix d'une succession de périodes de recherche (Pₙ₋₁, Pₙ), chacune de ces périodes ayant un début et une fin séparés par un nombre choisi desdits intervalles théoriques, ce nombre étant supérieur à trois et constituant une durée (k) de cette période, cette période incluant une succession de dits instants de réception,
- et des moyens de recherche comportant :
-- des moyens de choix d'une origine de recherche constituée par un instant non postérieur audit début de cette période,
-- des moyens de calcul pour calculer, pour chacun des dits instants de réception de cette période, un décalage associé à cet instant, ce décalage étant ledit décalage d'une dite plage de calcul ayant un début constitué par cette origine de recherche et une fin constituée par cet instant, et
-- des moyens de définition d'une borne de réglage (Bₙ), cette borne étant constituée par l'un desdits instants de réception de cette période et étant telle que ledit décalage am associé à cette borne est le plus petit des dits décalages associés à ces instants, lesdits débuts et fins desdites plages de réglage (Dm) étant constituées par les dites bornes de réglage (Bₙ₋₁ et Bₙ₎,
- des moyens de formation d'un signal d'erreur à partir des signaux sélectionnés,
- et des moyens d'asservissement de la fréquence de l'horloge locale (HR) à la fréquence de référence, à l'aide de ce signal d'erreur ;
ce système étant **caractérisé en ce que** les moyens de détermination de décalages temporels comportent :
- des moyens de choix d'un intervalle théorique (e) défini par rapport à la période de cette horloge locale (HR), et qui est aussi proche que possible de la durée de l'intervalle de référence,
- des moyens pour fournir une valeur de mesure pour chacun desdits intervalles de réception, en utilisant cette horloge locale (HR), cette valeur constituant un intervalle mesuré se terminant à ladite fin de cet intervalle,
- des moyens de définition d'une pluralité de plages de calcul, chacune de ces plages ayant un début et une fin constitués respectivement par deux desdits instants de réception, ces moyens comportant :
-- des moyens d'addition des dits intervalles mesurés se terminant dans cette plage, le résultat de cette addition constituant un intervalle mesuré cumulé (D) de cette plage, le nombre de ces intervalles constituant un nombre d'intervalles de cette plage,
-- des moyens de multiplication dudit intervalle théorique (e) par ledit nombre d'intervalles de cette plage, le résultat de cette multiplication constituant un intervalle théorique cumulé (E) de cette plage, et
-- des moyens de calcul d'un décalage (a) de cette plage, ce décalage ayant une valeur algébrique (D - E) égale audit intervalle mesuré cumulé de cette plage moins ledit intervalle théorique cumulé de cette plage ;
**et en ce que** des moyens de formation dudit signal d'erreur à partir des signaux sélectionnés comportent pour chaque plage de calcul :
- des moyens de calcul d'un décalage cumulé (A) de cette plage de calcul, ledit décalage cumulé de ladite première plage étant ledit décalage (am) de cette plage, ledit décalage cumulé de chacune des dites plages suivantes étant la somme algébrique des dits décalages am de cette plage suivante et des plages précédant cette plage suivante dans ladite succession de plages,
- et des moyens de formation d'un signal d'erreur constitué par ledit décalage cumulé d'une plage de cette succession de plages de calcul.

8. Système selon la revendication 7, ledit récepteur (R) comportant :
- des moyens pour lire l'intervalle dᵢ mesuré entre cet instant de réception (Mᵢ₊₁) et l'instant de réception (Mᵢ) précédant cet instant dans ladite suite reçue, i étant un indice valant 1 pour le premier instant de réception après le début de chaque dite période de recherche,
- des moyens pour faire D= D + dᵢ, D étant ledit intervalle mesuré cumulé d'une plage de calcul comprise dans cette période,
- des moyens pour faire E= E + e, E étant ledit intervalle théorique cumulé et e ledit intervalle théorique,
- des moyens pour faire a= D - E, a étant ledit décalage de cette plage,
- des moyens pour faire i= i + 1,
- des moyens pour répondre à la question a<am?, am étant une grandeur prévue pour évoluer jusqu'à représenter ledit décalage associé à une borne de calcul,
- des moyens pour faire, si la réponse à la question a<am? est "oui ":
-- am = a,
-- Dm =D, Dm étant défini par des instructions ultérieures,
-- et Em = E,
- des moyens pour répondre à la question i= k?, k étant ladite durée de cette période de recherche, quelle que soit la réponse à la question a<am?, et
-- des moyens pour attendre le prochain instant de réception, si la réponse à la question i= k? est "non" ;
-- des moyens pour, si la réponse à la question i = k ? est "oui" et si de plus une dite action est par ailleurs conforme au dit programme, réaliser cette action, et faire :
--- i = 1,
--- D = D - Dm,
--- E = E - Em,
--- am = aM, aM étant une grandeur prédéterminée au moins égale à la plus grande valeur prévisible d'un dit décalage associé à un instant de réception,
--- et attendre le prochain instant de réception.

9. Système selon la revendication 8, incluant en outre une unité de calcul d'incrément (G) pour calculer ledit incrément de fréquence, cette unité étant informée par ledit récepteur (R) et informant ladite horloge locale (HR), ladite unité de calcul comportant : R
- des moyens pour faire A = A + am, A étant une grandeur variable ayant une valeur nulle lors de la mise en service de ce système,
- des moyens pour répondre à la question IAI > S?, S étant une valeur absolue commune aux dits seuils de décalage positif et négatif,
-- des moyens pour attendre le prochain instant de réception, si la réponse à la question IAI > S? est "non",
-- des moyens pour répondre à la question A>S? si la réponse à la question IAI > S? est "oui",
-- des moyens pour, si la réponse à la question A>S? est "non" :
--- faire A= A + S
--- réaliser une dite modification F= F + f, F étant la fréquence de ladite horloge locale, f étant ledit incrément de fréquence, chaque dite modification étant réalisée par une commande de cette horloge par ledit récepteur avec l'aide de la dite unité de calcul d'incrément G,
--- et informer l'unité G de la modification précédente,
-- des moyens pour, si la réponse à la question A>S? est "oui" :
--- faire A = A - S,
--- réaliser une dite modification F = F - f, et
--- et informer l'unité G de la modification précédente.

10. Système selon l'une quelconque des revendications 7 à 9, ladite horloge locale (HR) étant munie d'une unité de mise en phase (JR) programmée pour réaliser un accord de phase provisoire de cette horloge locale avec une base de temps (HE, JE) extérieure à ce système grâce à un échange de signaux de synchronisation avec cette base de temps, cet échange étant fait via un moyen de transmission imposant à ces signaux des délais de transit constants.

11. **Réseau** radiotéléphonique incluant une pluralité de stations de base connectées les unes autres via un réseau de transmission asynchrone (N), ce système étant **caractérisé par le fait que** l'une au moins de ces stations de base constitue un système selon l'une quelconque des revendications 8 à 10.

## Patentansprüche

1. Verfahren zur Regelung der Frequenz eines lokalen Taktgebers (HR) über ein asynchrones Übertragungsnetz (N), bestehend aus:
- einem Schritt zum Senden einer Folge von so genannten Einstellsignalen mit dem Takt einer Referenzfrequenz, die jeweils Zeitpunkte (L₁... Lᵢ) markieren, wobei diese markierten Zeitpunkte in dieser gesendeten Folge durch aufeinander folgende Intervalle mit dem gleichen Wert voneinander getrennt sind, wobei dieser Wert ein Referenzintervall darstellt, wobei dieses Referenzintervall gleich einer vordefinierten Anzahl an Taktzeiten eines Sendetaktgebers (HE) ist,
- einem Schritt zur Übertragung der Einstellsignale über dieses asynchrone Übertragungsnetz, wobei diese Signale in diesem Netz mit unterschiedlichen Übertragungszeiträumen übertragen werden,
- einem Schritt zum Empfang einer Folge von Einstellsignalen am Ausgang des asynchronen Übertragungsnetzes, wobei die von diesen empfangenen Signale markierten Zeitpunkte Empfangszeitpunkte (M₁ .. Mᵢ) darstellen, die jeweils den von der Folge von Einstellsignalen markierten Zeitpunkten (L₁ ... Lᵢ) entsprechen, wobei in dieser empfangenen Folge Empfangsintervalle (d₁ ... dᵢ) vorhanden sind, die jeweils (d₁) einen Anfang (M₁), bestehend aus einem der genannten Empfangszeitpunkte, und ein Ende (M₂) aufweisen, bestehend aus dem Empfangszeitraum, der in dieser Folge diesem Anfang folgt,
- einen Schritt zur Bestimmung der zeitlichen Verschiebungen (am), die jeweils den empfangenen Signalen zugeordnet werden, wobei jede dieser Verschiebungen zwischen zwei Zeitpunkten (Bₙ, Cₙ) auftritt, die sich entsprechen und von denen einer zu einer empfangenen Folge, die aus den jeweils durch diese empfangenen Signale markierten Zeitpunkten besteht, und der andere zu einer theoretischen Folge gehört, die durch den genannten lokalen Taktgeber (HR) definiert wird, wobei dieser Zeitpunkt der empfangenen Folge durch das genannte, dieser Verschiebung zugeordnete Signal markiert wird,
- einem Schritt zur Auswahl der empfangenen Signale, deren Übertragungszeiträume unter den empfangenen Signalen minimal sind, wobei ein empfangenes Signal ausgewählt wird, wenn es sich bei der diesem empfangenen Signal zugeordneten Verschiebung unter den einer Gruppe von aufeinander folgenden Zeitpunkten (Pₙ) zugeordneten Verschiebungen der genannten empfangenen Folge um eine minimale Verschiebung handelt, wobei dieser Auswahlschritt die Auswahl einer Abfolge von Suchtaktzeiten (Pₙ₋₁, Pₙ) umfasst, wobei jede dieser Taktzeiten einen Anfang und ein Ende aufweist, die durch eine gewählte Anzahl der genannten theoretischen Intervalle voneinander getrennt sind, wobei diese Anzahl über 3 liegt und die Dauer (k) dieser Taktzeit darstellt, wobei diese Taktzeit eine Abfolge von so genannten Empfangszeitpunkten umfasst, und die Suchschritte jeweils für die Suchtaktzeiten ausgeführt werden und jeweils die folgenden Schritte umfassen:
-- Auswahl eines Suchanfangs, bestehend aus einem Zeitpunkt, der nicht nach dem Beginn dieser Taktzeit liegt,
-- Berechnung der diesem Zeitpunkt zugeordneten Verschiebung für jeden der genannten Empfangszeitpunkte dieser Taktzeit, wobei diese Verschiebung der genannten Verschiebung des genannten Berechnungsbereichs entspricht, mit einem Anfang, entsprechend diesem Suchanfang, und einem Ende entsprechend diesem Zeitpunkt, und
-- Definition einer Einstellgrenze (Bₙ), wobei diese Grenze durch einen der genannten Empfangszeitpunkte dieser Taktzeit dargestellt wird und so gestaltet ist, dass es sich bei der genannten, dieser Grenze zugeordneten Verschiebung (am) um die kleinste der diesen Zeitpunkten zugeordneten Verschiebungen handelt, wobei die genannten Anfänge und Enden der genannten Einstellbereiche (Dm) durch die genannten Einstellgrenzen (Bₙ₋₁ und Bₙ) dargestellt werden,
- einem Schritt zur Erstellung eines Fehlersignals ausgehend von den gewählten Signalen,
- einem Schritt zur Rückkopplung der Frequenz des lokalen Taktgebers (HR) mit der Referenzfrequenz mit Hilfe dieses Fehlersignals;
**wobei dieses Verfahren dadurch gekennzeichnet ist, dass** die Festlegung der zeitlichen Verschiebungen die folgenden Schritte umfasst:
- einen Schritt zur Auswahl eines theoretischen Intervalls (e), das in Bezug auf die Taktzeit dieses lokalen Taktgebers (HR) definiert wird und das der Dauer des Referenzintervalls so nah wie möglich kommt,
- einen Schritt, bestehend aus einer Abfolge von Einsätzen dieses lokalen Taktgebers (HR), um einen Messwert für jedes der genannten Empfangsintervalle zu liefern, wobei dieser Wert ein Messintervall darstellt, das zum Ende dieses Intervalls endet,
- einen Schritt zur Definition einer Vielzahl an Berechnungsbereichen, wobei jeder dieser Bereiche einen Anfang und ein Ende aufweist, die jeweils von zwei der genannten Empfangszeitpunkte dargestellt werden,
- und Schritte, die für jeden der genannten Berechnungsbereiche ausgeführt werden, wobei diese Schritte mindestens die- Folgenden umfassen:
-- einen Schritt zur Addition der genannten Messintervalle, die innerhalb dieses Bereichs enden, wobei das Ergebnis dieser Addition ein kumuliertes Messintervall (D) dieses Bereichs darstellt, wobei die Anzahl dieser Intervalle die Anzahl an Intervallen dieses Bereichs darstellt,
-- einen Schritt zur Multiplikation des genannten theoretischen Intervalls (e) mit der genannten Anzahl an Intervallen dieses Bereichs, wobei das Ergebnis dieser Multiplikation ein kumuliertes theoretisches Intervall (E) dieses Bereichs darstellt, und
-- einen Schritt zur Berechnung einer Verschiebung (a) dieses Bereichs, wobei diese Verschiebung einen algebraischen Wert (D - E) aufweist, der dem genannten kumulierten Messintervall dieses Bereichs, abzüglich dem genannten kumulierten theoretischen Intervall dieses Bereichs entspricht;
sowie **dadurch**, dass der Schritt zur Erstellung des genannten Fehlersignals ausgehend von den ausgewählten Signalen, für jeden Berechnungsbereich beinhaltet:
- einen Schritt zur Berechnung der kumulierten Verschiebung (A) dieses Berechnungsbereichs, wobei die genannte kumulierte Verschiebung des genannten ersten Bereichs die genannte Verschiebung (am) dieses Bereichs darstellt, wobei die genannte kumulierte Verschiebung jedes der genannten folgenden Bereiche der algebraischen Summe der genannten Verschiebungen (am) dieses folgenden Bereichs und der diesem Bereich vorhergehenden Bereiche in der genannten Abfolge der Bereiche entspricht,
- und einen Schritt zur Erstellung eines Fehlersignals, bestehend aus der genannten kumulierten Verschiebung eines Bereichs dieser Abfolge von Berechnungsbereichen.

2. Verfahren gemäß Anspruch 1, wobei dieses Verfahren durch die Tatsache **gekennzeichnet** ist, dass es außerdem Schritte zur Einstellung der Frequenz des genannten lokalen Taktgebers beinhaltet, wobei jeder dieser Schritte den Abschlussschritt einer Einstellsequenz darstellt, die auch eine Gruppe zur Einstellung dieses Schritts umfasst, wobei diese Gruppe mindestens einen genannten Berechnungsbereich beinhaltet, wobei die Berechnungsbereiche dieser Gruppe jeweils Einstellbereiche darstellen, wobei die kumulierte Verschiebung (A) dieser Gruppe jeweils durch die algebraische Summe der genannten Verschiebungen dieser Einstellbereiche dargestellt wird, wobei ein Vorgang dieses Schritts die Frequenz des genannten lokalen Taktgebers (HR) erhöht oder verringert, je nachdem, ob die genannte kumulierte Verschiebung dieser Gruppe negativ oder positiv ist, so dass diese kumulierte Verschiebung das genannte Fehlersignal darstellt.

3. Verfahren gemäß Anspruch 2, wobei dieses Verfahren durch die Tatsache **gekennzeichnet** ist, dass der Anfang (M₁) jeder dieser Taktzeiten (Pₙ) in der genannten Abfolge von Suchtaktzeiten durch das Ende der vorhergehenden Taktzeit (Pₙ₋₁) dargestellt wird.

4. Verfahren gemäß Anspruch 3, wobei dieses Verfahren durch die Tatsache **gekennzeichnet** ist, dass für jede genannte Suchtaktzeit, die eine bestimmte Taktzeit (Pₙ) darstellt, der genannte Suchanfang dieser Taktzeit durch die genannte Einstellgrenze (Bₙ₋₁) einer Suchtaktzeit (Pₙ₋₁) dargestellt wird, die dieser bestimmten Taktzeit in der Abfolge der Suchtaktzeiten vorangeht, wobei der genannte Einstellbereich einen Anfang und ein Ende aufweist, die jeweils durch die beiden genannten Einstellgrenzen (Bₙ₋₁, Bₙ) dieser beiden Taktzeiten dargestellt werden.

5. Verfahren gemäß Anspruch 4, wobei die genannten Dauer (k) der Suchtaktzeiten zwischen 10 und 10 000 beträgt.

6. Verfahren gemäß Anspruch 1, wobei die genannten Einstellsequenzen eine Abfolge von Sequenzen bilden und dieses Verfahren außerdem die folgenden Schritte umfasst:
- Definition eines tolerierten Verschiebungsbereichs zwischen einem positiven Verschiebungsgrenzwert (S) und einem negativen Verschiebungsgrenzwert (-S), und
- Definition einer Abfolge von Frequenzinkrementen (f) für die genannten Einstellsequenzen, wobei die genannte Frequenzänderung der genannten Einstellsequenz nur vorgenommen wird, wenn die genannte kumulierte Verschiebung (A) des Bereichs der genannten Einstellgruppe dieser Sequenz den genannten tolerierten Einstellbereich überschreitet, wobei diese Änderung eine Amplitude aufweist, die dem genannten Frequenzinkrement (f) entspricht, das für diese Sequenz definiert wurde, wobei dieser Bereich dann den letzten Bereich dieser Einstellgruppe darstellt.

7. System zur Regelung der Frequenz eines lokalen Taktgebers (HR) über ein asynchrones Übertragungsnetz (N), bestehend aus:
- Vorrichtungen zum Senden einer Folge von so genannten Einstellsignalen mit dem Takt einer Referenzfrequenz, die jeweils Zeitpunkte (L₁... Lᵢ) markieren, wobei diese markierten Zeitpunkte in dieser gesandten Folge durch aufeinander folgende Intervalle mit dem gleichen Wert voneinander getrennt sind, wobei dieser Wert ein Referenzintervall darstellt, wobei dieses Referenzintervall gleich einer vordefinierten Anzahl an Taktzeiten eines Sendetaktgebers (HE) ist,
- Vorrichtungen zur Übertragung der Einstellsignale über dieses asynchrone Übertragungsnetz, wobei diese Signale mit unterschiedlichen Übertragungszeiträumen über dieses Netz übertragen werden,
- Vorrichtungen zum Empfang einer Folge von Einstellsignalen am Ausgang des asynchronen Übertragungsnetzes, wobei die von diesen empfangenen Signalen markierten Zeitpunkte Empfangszeitpunkte (M₁ ... Mᵢ) darstellen, die jeweils den von der Folge von Einstellsignalen markierten Zeitpunkten (L₁ ... Lᵢ) entsprechen, wobei in dieser empfangenen Folge Empfangsintervalle (d₁ ... dᵢ) vorhanden sind, die jeweils (d₁) einen Anfang (M₁), bestehend aus einem der genannten Empfangszeitpunkte, und ein Ende (M₂) aufweisen, bestehend aus dem Empfangszeitraum, der in dieser Folge diesem Anfang folgt,
- Vorrichtungen zur Ermittlung der zeitlichen Verschiebungen (am), die den empfangenen Signalen zugeordnet werden, wobei jede dieser Verschiebungen zwischen zwei Zeitpunkten (Bₙ, Cₙ) auftritt, die sich entsprechen und von denen einer zu einer empfangenen Folge von Zeitpunkten, die jeweils von diesen empfangenen Signalen markiert werden, und der andere zu einer theoretischen Folge gehört, die durch den genannten lokalen Taktgeber (HR) definiert wird, wobei dieser Zeitpunkt der empfangenen Folge durch das genannte, dieser Verschiebung zugeordnete Signal markiert wird,
- Vorrichtungen zur Auswahl der empfangenen Signale, deren Übertragungszeiträume unter den empfangenen Signalen minimal sind, wobei ein empfangenes Signal ausgewählt wird, wenn die genannte, diesem empfangenen Signal zugeordnete Verschiebung unter den einer Gruppe von aufeinander folgenden Zeitpunkten (Pₙ) der genannten empfangenen Folge zugeordneten Verschiebungen eine minimale Verschiebung aufweist, wobei dieser Auswahlschritt die Auswahl einer Abfolge von Suchtaktzeiten (Pₙ₋₁, Pₙ) umfasst, wobei jede dieser Taktzeiten einen Anfang und ein Ende aufweist, die durch eine bestimmte Anzahl an genannten theoretischen Intervallen voneinander getrennt sind, wobei diese Anzahl größer ist als drei und die Dauer (k) dieser Taktzeit darstellt, wobei diese Taktzeit eine Abfolge der genannten Empfangszeitpunkte umfasst,
- und Suchvorrichtungen, bestehend aus:
-- Vorrichtungen zur Auswahl eines Suchanfangs, dargestellt durch einen Zeitpunkt, der nicht nach dem Anfang dieser Taktzeit liegt,
-- Rechenvorrichtungen zur Berechnung einer diesem Zeitpunkt zugeordneten Verschiebung für jeden der genannten Empfangszeitpunkte dieser Taktzeit, wobei es sich bei dieser Verschiebung um die Verschiebung des genannten Berechnungsbereiches handelt, mit einem Anfang, dargestellt durch diesen Suchanfang, und einem Ende, dargestellt durch diesen Zeitpunkt, und
-- Vorrichtungen zur Definition einer Einstellgrenze (Bₙ), wobei diese Grenze aus einem der genannten Empfangszeitpunkte dieser Taktzeit besteht und so gestaltet ist, dass die genannte Verschiebung (am), die dieser Grenze zugeordnet ist, die kleinste der diesen Zeitpunkten zugeordneten genannten Verschiebungen ist, wobei die genannten Anfänge und Enden der genannten Einstellbereiche (Dm) durch die genannten Einstellgrenzen (Bₙ₋₁ und Bₙ) dargestellt werden,
- Vorrichtungen zur Erstellung eines Fehlersignals, ausgehend von den ausgewählten Signalen,
- und Vorrichtungen zur Rückkopplung der Frequenz eines lokalen Taktgebers (HR) mit der Referenzfrequenz mit Hilfe dieses Fehlersignals;
wobei dieses System **dadurch gekennzeichnet ist, dass** die Vorrichtungen zur Bestimmung der zeitlichen Abweichungen umfassen:
- Vorrichtungen zur Auswahl eines theoretischen Intervalls (e), das in Bezug auf die Taktzeit dieses lokalen Taktgebers (HR) definiert wird und der Dauer des Referenzintervalls so nah wie möglich kommt,
- Vorrichtungen zur Lieferung eines Messwerts für jedes der genannten Empfangsintervalle unter Verwendung dieses lokalen Taktgebers (HR), wobei dieser Wert ein Messintervall darstellt, das zum genannten Ende dieses Intervalls endet,
- Vorrichtungen zur Definition einer Vielzahl an Berechnungsbereichen, wobei jeder diese Bereiche einen Anfang und ein Ende aufweist, die jeweils durch zwei der genannten Empfangszeitpunkte dargestellt werden, wobei diese Vorrichtungen umfassen:
-- Vorrichtungen zur Addition der genannten Messintervalle, die innerhalb dieses Bereichs enden,
wobei das Ergebnis dieser Addition ein kumuliertes Messintervall (D) dieses Bereichs darstellt, wobei die Anzahl dieser Intervalle die Anzahl der Intervalle dieses Bereichs darstellt,
-- Vorrichtungen zur Multiplikation des genannten theoretischen Intervalls (e) mit der genannten Anzahl an Intervallen dieses Bereichs, wobei das Ergebnis dieser Multiplikation das kumulierte theoretische Intervall (E) dieses Bereichs darstellt, und
-- Vorrichtungen zur Berechnung der Verschiebung (a) dieses Bereichs mit einem algebraischen Wert (D - E) gleich dem genannten kumulierten Messintervall dieses Bereichs abzüglich des genannten kumulierten theoretischen Intervalls dieses Bereichs;
**sowie dadurch, dass** die Vorrichtungen zur Erstellung des genannten Fehlersignals ausgehend von den ausgewählten Signalen für jeden Messbereich beinhalten:
- Vorrichtungen zur Berechnung der kumulierten Verschiebung (A) dieses Berechnungsbereichs, wobei die genannte kumulierte Verschiebung des genannten ersten Bereichs die genannte Verschiebung (am) dieses Bereichs darstellt, wobei die kumulierte Verschiebung jedes der genannten folgenden Bereiche die algebraische Summe der genannten Verschiebungen (am) dieses folgenden Bereichs und der diesem Bereich vorausgehenden Bereiche in der genannten Abfolge der Bereiche darstellt,
- und Vorrichtungen zur Erstellung eines Fehlersignals, dargestellt von der genannten kumulierten Verschiebung eines Bereichs dieser Abfolge von Berechnungsbereichen.

8. System gemäß Anspruch 7, wobei der genannte Empfänger (R) beinhaltet:
- Vorrichtungen zum Auslesen des Intervalls Dᵢ, das zwischen diesem Empfangszeitpunkt (Mᵢ₊₁) und dem vorhergehenden Empfangszeitpunkt (Mᵢ) in der genannten Empfangsfolge gemessen wird, wobei i ein Index ist, der für den ersten Empfangszeitpunkt nach Beginn jeder so genannten Suchtaktzeit den Wert 1 aufweist,
- Vorrichtungen zur Ausführung von D = D + dᵢ, wobei D das genannte kumulierte Messintervall eines Berechnungsbereichs innerhalb dieser Taktzeit darstellt,
- Vorrichtungen zur Ausführung von E = E + e, wobei E das genannte kumulierte theoretische Intervall und e das genannte theoretische Intervall darstellt,
- Vorrichtungen zur Ausführung von a = D - E, wobei a die genannte Verschiebung dieses Bereichs darstellt,
- Vorrichtungen zur Ausführung von i = i + 1,
- Vorrichtungen zur Beantwortung der Frage a<am?, wobei am eine Größe ist, die so lange weiter ansteigt, bis sie die genannte Verschiebung aufweist, die der Berechnungsgrenze zugeordnet ist,
- Vorrichtungen zur Ausführung, wenn die Antwort auf die Frage a<am? "ja" lautet, von:
-- am = a,
-- Dm = D, wobei Dm von den nachfolgenden Anweisungen definiert wird.
-- und Em = E,
- Vorrichtungen zur Beantwortung der Frage i = k?, wobei k die genannte Dauer dieser Suchtaktzeit darstellt, unabhängig von der Antwort auf die Frage a<am?, und
-- Vorrichtungen zum Abwarten des nächsten Empfangszeitpunkts, wenn die Antwort auf die Frage i = k? "nein" lautet;
-- Vorrichtungen, die, falls die Antwort auf die Frage i = k? "ja" lautet und falls außerdem ein genannter Vorgang dem genannten Programm entspricht, diesen Vorgang ausführen, und Ausführung von:
--- i = 1,
--- D = D - Dm,
--- E = E - Em,
--- am = aM, wobei aM eine vordefinierte Größe ist, die mindestens dem größten vorhersehbaren Wert einer dem Empfangszeitpunkt zugeordneten genannten Verschiebung entspricht,
--- und Abwarten des nächsten Empfangszeitpunkts.

9. System gemäß Anspruch 8, das außerdem ein Inkrementrechenwerk (G) umfasst, um das genannte Frequenzinkrement zu berechnen, wobei dieses Rechenwerk Informationen von dem genannten Empfänger (R) enthält und die Informationen an den genannten lokalen Taktgeber (HR) weiterleitet, wobei das genannte Rechenwerk umfasst:
- Vorrichtungen zur Ausführung von A = A + am, wobei A eine variable Größe ist, die bei Inbetriebnahme dieses Systems den Wert Null aufweist,
- Vorrichtungen zur Beantwortung der Frage IAI > S?, wobei S einen absoluten Wert darstellt, der für den genannten positiven und negativen Abweichungsgrenzwert gleich ist,
-- Vorrichtungen zum Abwarten des nächsten Empfangszeitpunkts, wenn die Antwort auf die Frage IAI >S? "nein" lautet,
-- Vorrichtungen zur Beantwortung der Frage A>S?, wenn die Antwort auf die Frage IAI>S? **"**ja" lautet,
-- Vorrichtungen, falls die Antwort auf die Frage A>S? "nein" lautet, zur:
--- Ausführung von A = A + S
--- Umsetzung der genannten Änderung F = F + f, wobei F die Frequenz des genannten lokalen Taktgebers und f das genannte Frequenzinkrement darstellt, wobei jede genannte Änderung anhand eines Befehls dieses genannten Taktgebers durch den genannten Empfänger mit Hilfe des genannten Inkrementrechenwerks G ausgeführt wird,
--- Übermittlung der Informationen über die vorhergehende Änderung an das Rechenwerk G,
-- Vorrichtungen, falls die Antwort auf die Frage A>S? "ja" lautet, zur:
--- Ausführung von A = A - S,
--- Umsetzung der genannten Änderung F = F - f, und
--- Übermittlung der Informationen über die vorhergehende Änderung an das Rechenwerk G.

10. System gemäß einem der Ansprüche 7 bis 9, wobei der genannte lokale Taktgeber (HR) mit einer Phasenregelungsvorrichtung (JR) ausgerüstet ist, die entsprechend programmiert ist, um einen provisorischen Phasenabgleich zwischen diesem lokalen Taktgeber und einer Zeitbasis (HE, JE) außerhalb des Systems auszuführen, der anhand des Austauschs von Synchronisationssignalen mit dieser Zeitbasis durchgeführt wird, wobei dieser Austausch über eine Übertragungsvorrichtung erfolgt, die diesen Signalen konstante Übertragungszeiträume vorgibt.

11. **Sprechfunknetz,** das eine Vielzahl an Basisstationen beinhaltet, die über ein asynchrones Übertragungsnetz (N) miteinander verbunden sind, wobei dieses System durch die Tatsache **gekennzeichnet** ist, dass mindestens eine dieser Basisstationen ein System gemäß einem der Ansprüche 8 bis 10 darstellt.

## Claims

1. Method for slaving a frequency of a local clock (HR) via an asynchronous transmission network (N), including:
- a step of sending, at the timing rate of a reference frequency, a series of so-called calibration signals, marking respective times (L₁ ... Lᵢ), the marked times being separated in the sent sequence by successive intervals having the same value, that value constituting a reference interval, that reference interval being equal to a predetermined number of periods of a send clock (HE),
- a step of transmitting calibration signals, over this asynchronous transmission network, these signals being transmitted by this network with respective varied transit delays,
- a step of reception of a series of calibration signals at the output of the asynchronous transmission network, the times marked by these received signals constituting reception times (M₁ ... Mᵢ) corresponding respectively to the times (L₁ ... Lᵢ) marked by the series of calibration signals, reception intervals (d₁ ... dᵢ) being present in this received series and each (d₁) having a beginning (M₁) consisting of one of said reception times and an end (M₂) consisting of that of these reception times that follows this beginning in this series,
- a step of determining time offsets (am) associated with respective received signals, each of these offsets appearing between two times (Bₙ, Cₙ) corresponding to each other and belonging, one to a received series formed of times respectively marked by these received signals, and the other to a theoretical series defined by said local clock (HR), this time of the received series being marked by said signal associated with this offset,
- a step of selection of the received signals whose transit delays are minimal, from among the received signals, a received signal being selected if the offset associated with that received signal is a minimum offset of the offsets associated with a group of consecutive times (Pₙ) of said received series, this selection step including the choice of a succession of search periods (Pₙ₋₁, Pₙ), each of these periods having a beginning and an end separated by a selected number of said theoretical intervals, that number being greater than three and constituting a duration (k) of that period, that period including a succession of said reception times, and search steps being carried out respectively for these search periods and each including the following steps:
-- choice of a search origin consisting of a time not posterior to said beginning of this period,
-- for each of said reception times of this period, calculation of an offset associated with that time, that offset being said offset of one of said calculation ranges having a beginning consisting of that search origin and an end consisting of that time, and
-- definition of an adjustment limit (Bₙ), that limit consisting of one of said reception times of this period and being such that said offset (am) associated with this limit is the smallest of said offsets associated with these times, said beginnings and ends of said adjustment ranges (Dm) consisting of said adjustment limits (Bₙ₋₁ and Bₙ),
- a step of formation of an error signal from selected signals,
- a step of slaving the frequency of the local clock (HR) to the reference frequency with the aid of this error signal;
this method being **characterized in that** the determination of the temporal offsets includes the following steps:
- a step of choosing a theoretical interval (e) defined relative to the period of this local clock (HR), and that is as close as possible to the duration of the reference interval,
- a step consisting of a succession of uses of this local clock. (HR) to supply a measurement value for each of said reception intervals, that value constituting a measured interval terminating at said end of that interval,
- a step of definition of a plurality of calculation ranges, each of these ranges having a beginning and an end consisting of a respective two of said reception times, and
- steps carried out for each of said calculation ranges, said steps being at least the following:
-- a step of addition of said measured intervals terminating in this range, the result of this addition constituting a cumulative measured interval (D) of this range, the number of these intervals constituting a number of intervals of this range,
-- a step of multiplication of said theoretical interval (e) by said number of intervals of this range, the result of this multiplication constituting a cumulative theoretical interval (E) of this range, and
-- a step of calculation of an offset (a) of this range, this offset having an algebraic value (D - E) equal to said cumulative measured interval of this range less said cumulative theoretical interval of this range;
and **in that** the step of formation of said error signal from selected signals includes, for each calculation range:
- a step of calculation of a cumulative offset (A) of this calculation range, said cumulative offset of said first range being said offset (am) of that range, said cumulative offset of each of said subsequent ranges being the algebraic sum of said offsets (am) of that next range and of the ranges preceding that next range in said succession of ranges, and
- a step of formation of an error signal consisting of said cumulative offset of a range of said succession of calculation ranges.

2. Method according to claim 1, **characterized in that** it further includes action steps for adjusting the frequency of said local clock, each of these steps constituting a terminal step of an adjustment sequence also including an adjustment group of this step, that group including at least one of said calculation ranges, the calculation ranges of that group constituting respective adjustment ranges, a cumulative offset (A) of this group consisting of the algebraic sum of said offsets of these adjustment ranges, an action of this step applying to the frequency of said local clock (HR) a plus or minus modification according to whether said cumulative offset of this group is negative or positive, respectively, so that this cumulative offset constitutes one of said error signals.

3. Method according to claim 2, **characterized in that**, in said succession of search periods, the beginning (M₁) of each of these periods (Pₙ) consists of the end of the preceding period (Pₙ₋₁).

4. Method according to claim 3, **characterized in that**, for each of said search periods constituting a period (Pₙ) concerned, said search origin of that period consists of said adjustment limit (Bₙ₋₁) of a search period (Pₙ₋₁) preceding the period concerned in said succession of search periods, one of said adjustment ranges having its beginning and its end respectively consisting of said two adjustment limits (Bₙ₋₁, Bₙ) of these two periods.

5. A method according to claim 4, said duration (k) of the search periods being from 10 to 10 000.

6. A method according to claim 1, said adjustment sequences form a succession of sequences, and further including the steps of:
- defining a tolerated offset domain between a positive offset threshold(s) and a negative offset threshold(s), and
- defining a succession of respective frequency (f) increments for said adjustment sequences, said frequency modification of each of said adjustment sequences being performed only when said cumulative adjustment (A) of a range of said adjustment group of said sequence leaves said tolerated offset domain, said modification having an amplitude equal to said frequency (f) increment defined for said sequence, said range then constituting a last range of said adjustment group.

7. A system for controlling a frequency of a local clock (HR) via an asynchronous transmission network (N), comprising:
- means for sending, at the timing rate of a reference frequency, a series of so-called calibration signals, marking respective times (L₁ ... Lᵢ), the marked times being separated in the sent sequence by successive intervals having the same value, that value constituting a reference interval, that reference interval being equal to a predetermined number of periods of a send clock (HE),
- means for transmitting calibration signals, over this asynchronous transmission network, these signals being transmitted by this network with respective varied transit delays,
- means for receiving a series of calibration signals at the output of the asynchronous transmission network, the times marked by these received signals constituting reception times (M₁ ... Mᵢ) corresponding respectively to the times (L₁ ... Lᵢ) marked by the series of calibration signals, reception intervals (d₁ ... dᵢ) being present in this received series and each (d₁) having a beginning (M₁) consisting of one of said reception times and an end (M₂) consisting of that of these reception times that follows this beginning in this series,
- means for determining time offsets (am) associated with respective received signals, each of these offsets appearing between two times (Bₙ, Cₙ) corresponding to each other and belonging, one to a received series formed of times respectively marked by these received signals, and the other to a theoretical series defined by said local clock (HR), this time of the received series being marked by said signal associated with this offset,
- means for selecting the received signals whose transit delays are minimal, from among the received signals, a received signal being selected if said offset associated with that received signal is a minimum offset of the offsets associated with a group of consecutive times (Pₙ) of said received series, this selection step including the choice of a succession of search periods (Pₙ₋₁, Pₙ), each of these periods having a beginning and an end separated by a selected number of said theoretical intervals, that number being greater than three and constituting a duration (k) of that period, that period including a succession of said reception times, and search means comprising:
-- means for choosing a search origin consisting of a time not posterior to said beginning of this period,
-- for each of said reception times of this period, means for calculating an offset associated with that time, that offset being said offset of one of said calculation ranges having a beginning consisting of that search origin and an end consisting of that time, and
-- means for defining an adjustment limit (Bₙ), that limit consisting of one of said reception times of this period and being such that said offset (am) associated with this limit is the smallest of said offsets associated with these times, said beginnings and ends of said adjustment ranges (Dm) consisting of said adjustment limits (Bₙ₋₁ and Bₙ),
- means for forming an error signal from selected signals,
- means for slaving the frequency of the local clock (HR) to the reference frequency with the aid of this error signal;
this system being **characterized in that** the means for determining the temporal offsets include:
- means for choosing a theoretical interval (e) defined relative to the period of this local clock (HR), and that is as close as possible to the duration of the reference interval,
- means for supplying a measurement value for each of said reception intervals using that local clock (HR), the value constituting a measured interval terminating at said end of that interval,
- means for defining a plurality of calculation ranges, each of these ranges having a beginning and an end consisting of a respective two of said reception times, these means comprising:
-- means for adding said measured intervals terminating in this range, the result of this addition constituting a cumulative measured interval (D) of this range, the number of these intervals constituting a number of intervals of this range,
-- means for multiplying said theoretical interval (e) by said number of intervals of this range, the result of this multiplication constituting a cumulative theoretical interval (E) of this range, and
-- means for calculating an offset (a) of this range, this offset having an algebraic value (D - E) equal to said cumulative measured interval of this range less said cumulative theoretical interval of this range;
and **in that** the means for forming said error signal from selected signals include, for each calculation range:
- means for calculating a cumulative offset (A) of this calculation range, said cumulative offset of said first range being said offset (am) of that range, said cumulative offset of each of said subsequent ranges being the algebraic sum of said offsets (am) of that next range and of the ranges preceding that next range in said succession of ranges, and
- means for forming an error signal consisting of said cumulative,offset of a range of said succession of calculation ranges.

8. A system according to claim 7, said receiver (R) comprising:
- means for reading the interval dᵢ measured between said receive instant (Mᵢ₊₁) and the receive instant (Mᵢ) preceding said instant in said received sequence, i being an index equal to 1 for the first receive instant after the start of each search period,
- means for calculating D = D + dᵢ, D being said cumulative measured interval of a calculation range within said period,
- means for calculating E = E + e, E being said cumulative theoretical interval and e being said theoretical interval,
- means for calculating a = D - E, a being said offset of said range,
- means for calculating i = i + 1,
- means for answering the question a<am?, where am is a parameter that evolves until it is representative of said offset associated with a calculation limit,
- means for setting, if the response to the question a<am? is "yes":
- am = a,
- Dm = D, Dm being defined by subsequent instructions, and
- Em = E,
- regardless of the answer to the question, a<am?, means for answering the question i= k?, k being said duration of said search period,
- if the answer to the question i=k? is "no": means for waiting for the next receive instant,
- if the answer to the question i=k? is "yes" and if an action also conforms to said program, means for performing that action and setting,
- i = 1,
- D = D - Dm,
- E = E - Em,
- am = aM, aM being a predetermined parameter at least equal to the largest value foreseeable for an offset associated with a receive instant, and
- waiting for the next receive instant.

9. A system according to claim 8 and further including an increment calculating unit (G) for calculating said frequency increment, said unit being informed by said receiver (R) and informing said local clock (HR), said calculating unit comprising:
- means for calculating A = A + am, A being a variable parameter having a zero value when the system is commissioned,
- means for answering the question IAI > S?, S being an absolute value common to said positive and negative offset thresholds,
- if the answer to the question IAI>S? is "no": means for waiting for the next receive instant,
- if the answer to the question IAI>S? is "yes": means for answering the question A>S?,
- if the response to the question A>S? is "no":
- means for setting A= A + S,
- means for making the modification F= F + f, F being the frequency of said local clock and f being said frequency increment, each of said modifications being effected by control of said clock by said receiver with the aid of said increment calculating unit G,
- means for informing the unit G of the preceding modification,
- if the answer to the question is A>S? "yes": means for calculating A = A - S,
- means for effecting one of said modifications F = F - f, and
- means for informing the said unit G of the preceding modification.

10. A system according to any one of claims 7 to 9, said local clock (HR) including a phase synchronization unit (JR) programmed to bring about provisional phase agreement of said local clock with a timebase (HE, JE) external to said system by exchanging synchronization signals with said timebase via transmission means imposing constant transit delays on said signals.

11. A mobile telephone network including a plurality of base stations interconnected via an asynchronous transmission network (N) and **characterized in that** at least one of said base stations is a system as according to any one of claims 8 to 10.
